(19)

Europäisches
Patentamt
European
Patent Office
Office européen
des brevets

(11) **EP 1 913 819 B1**

(12) **EUROPEAN PATENT SPECIFICATION**

(45) Date of publication and mention
of the grant of the patent:
**08.12.2010 Bulletin 2010/49**

(51) Int Cl.:
*A23G 9/32* (2006.01)     *A23G 9/46* (2006.01)
*A23G 9/40* (2006.01)

(21) Application number: **07118669.6**

(22) Date of filing: **17.10.2007**

(54) **Frozen aerated confections and methods for production thereof**

Tiefgekühlte belüftete Süßwaren und Herstellungsverfahren dafür

Confections aérées surgelées et leurs procédés de fabrication

(84) Designated Contracting States:
**AT BE BG CH CY CZ DE DK EE ES FI FR GB GR
HU IE IS IT LI LT LU LV MC MT NL PL PT RO SE
SI SK TR**

(30) Priority: **19.10.2006 EP 06122552**

(43) Date of publication of application:
**23.04.2008 Bulletin 2008/17**

(73) Proprietors:
• **Unilever PLC**
  **London**
  **EC4Y 0DY (GB)**
  Designated Contracting States:
  **CY GB IE MT**
• **Unilever N.V.**
  **3013 AL Rotterdam (NL)**
  Designated Contracting States:
  **AT BE BG CH CZ DE DK EE ES FI FR GR HU IS IT
  LI LT LU LV MC NL PL PT RO SE SI SK TR**

(72) Inventors:
• **Quail, Patricia, Jill**
  **Bedford, Bedfordshire MK44 1LQ (GB)**
• **Underdown, Jeffrey**
  **Bedford, Bedfordshire MK44 1LQ (GB)**

(74) Representative: **Hugot, Alain**
  **Unilever Patent Group**
  **Colworth House**
  **Sharnbrook**
  **Bedford, MK44 1LQ (GB)**

(56) References cited:
  **EP-A- 1 738 650        EP-A1- 1 400 176
  WO-A-2007/072184**

• **DATABASE WPI Week 200638 Derwent
  Publications Ltd., London, GB; AN 2006-369614
  XP002436754 -& JP 2006 136306 A (FUKAYA S) 1
  June 2006 (2006-06-01)**

**Description**

**Technical Field of the invention**

The present invention relates to frozen aerated confections, such as ice cream. In particular, it relates to frozen aerated confections that contain oils which are low in saturated fat, such as rapeseed oil.

**Background to the invention**

Frozen aerated confections, such as ice creams, sorbets and the like are popular foodstuffs. Typically they are aerated to an overrun of about 100%. Fat is an important constituent of such confections. Conventionally, frozen aerated confections have been prepared with fats having a high proportion of saturated fat, for example dairy fat (60-65%) or coconut oil (90%), together with emulsifiers such as mono/di-glycerides of fatty acids. Typically the emulsifiers are present at about 0.1 % by weight of the confection. Saturated fats are conventionally used because they are mostly solid at the temperatures at which freezing and aeration take place in an ice cream freezer. The presence of solid fat together with an emulsifier results in ice cream that can be aerated uniformly and consistently, holds its shape after extrusion and has a good texture when eaten (see for example, "Ice Cream", 6th Edition R.T. Marshall, H.D. Goff and R.W. Hartel, Kluwer Academic / Plenum Publishers, New York 2003, pages 36, 42-43 and 69; or "The Science of Ice Cream", C. Clarke, Royal Society of Chemistry, Cambridge, 2004, pages 46-48 and 62-73). Shape formation and retention is a critical factor in producing products which are shaped on extrusion, for example Viennetta™. Such products cannot normally be produced with a low level of solid fat, because liquid fat produces an unstable air phase resulting in uneven aeration and poor shaping properties.

Health-conscious consumers are now looking for frozen aerated confections which have all the properties of these traditional products but which are healthier. It has therefore been proposed to produce frozen aerated confections in which saturated fats are replaced by mono- or polyunsaturated fats. US 5 478 587 discloses compositions useful for preparing frozen desserts based on a non-dairy creamer containing canola (rapeseed) oil and mono-/di-glycerides. Although the composition is said to be useful for preparing frozen desserts, none are exemplified. JP 2006 136306 discloses soybean milk ice cream containing soybean milk, rapeseed oil, unpolished rice-fermented rice drink, salt and maple syrup. It has not been possible simply to replace the saturated fats in ice cream formulations with unsaturated fats (which are liquid at ambient temperatures) and obtain the desired shaping properties and consistency of aeration, because unsaturated fats do not contain sufficient solid fat. Thus there remains a need to provide frozen aerated confections containing low levels of saturated fats which have good aeration and shaping properties.

**Tests and Definitions**

Unless defined otherwise, all technical and scientific terms used herein have the same meaning as commonly understood by one of ordinary skill in the art (e.g. in frozen food manufacture). Definitions and descriptions of various terms and techniques used in frozen confectionery manufacture are found in "Ice Cream", 6th Edition. With the exception of percentages cited in relation to the overrun, all percentages, unless otherwise stated, refer to the approximate percentage by weight of the total composition.

Frozen aerated confection

The term "frozen aerated confection" as used in this specification means a sweet-tasting fabricated foodstuff intended for consumption in the frozen state (i.e. under conditions wherein the temperature of the foodstuff is less than 0°C, and preferably under conditions wherein the foodstuff comprises a significant amount of ice). Frozen aerated confections are made by freezing a pasteurised mix of ingredients. Overrun is typically produced by intentionally incorporating gas into the product, such as by mechanical agitation. The gas can be any food-grade gas such as air, nitrogen or carbon dioxide. Typical examples of frozen aerated confections include ice creams.

Fat

Fats are largely made up of triglycerides (approximately 98%), together with minor amounts of other components such as phospholipids and diglycerides. Triglycerides are esters of glycerol with three fatty acids. Fatty acids which have no carbon-carbon double bonds are said to be saturated (herein abbreviated as SAFA), whereas fatty acids that contain one or more carbon-carbon double bonds are said to be monounsaturated (abbreviated as MUFA) and polyunsaturated (PUFA) respectively. Fats that are liquid at ambient temperatures are often referred to as oils. In this specification the term "fat" includes such oils. The SAFA, MUFA and PUFA contents of fats and oils are given in "The Lipid Handbook", Second Edition, Authors Frank D Gunstone, John L Harwood, Fred B Padley, Published by Chapman & Hall 1994.

Oil bodies (also known as oleosomes, lipid bodies or spheresomes) are discrete subcellular structures found in the seeds of oilseed crops in which the oil is naturally encapsulated by a monolayer of phospholipids in which proteins (known as oleosins) are embedded. As used herein, the term fat refers to fats and oils extracted from such sources, and therefore does not include oil bodies.

Mammalian Milk Proteins

Sources of mammalian milk protein include milk, concentrated milk, milk powders (such as skimmed milk powder), caseins, caseinates (such as sodium and/or calcium caseinates) whey, whey powders and whey protein concentrates/isolates. Sources of mammalian milk protein generally also comprise other materials. For example, skimmed milk powder typically comprises 37% milk protein, 55% lactose and 8% milk minerals.

Cow milk is the preferred mammalian milk.

Sweetener

Sweetener means a mono-, di- or oligo-saccharide containing from three to twenty monosaccharide units joined in glycosidic linkage, or a corn syrup, or a sugar alcohol, or a mixture thereof. Sweeteners include sucrose, fructose, lactose (for example from the source of mammalian milk protein), dextrose, invert sugar, corn syrup, maltodextrin, oligofructose, inulins and sorbitol.

Free Sugars

The term "free sugars" is defined as in "Diet, nutrition and the prevention of chronic diseases" - Report of a Joint WHO/FAO Expert Consultation, WHO Technical Report Series 916, WHO, Geneva, 2003. Thus free sugars are all mono and disaccharides added by the manufacturer, cook or consumer plus sugar naturally present and sourced from honey, syrups and juices. Free sugars do not include sugars naturally present and sourced from fruit or mammalian milk.

Emulsifiers

Emulsifiers are described in "Ice Cream", 6th Edition, pages 85-86. The term "emulsifier" as used herein includes mono- and di-glycerides of saturated or unsaturated fatty acids (e.g. monoglyceryl palmitate - MGP), polyoxyethylene derivatives of hexahydric alcohols (usually sorbitol), glycols, glycol esters, polyglycerol esters, sorbitan esters, stearoyl lactylate, acetic acid esters, lactic acid esters, citric acid esters, acetylated monoglyceride, diacetyl tartaric acid esters, polyoxyethylene sorbitan esters (such as polysorbate 80), sucrose esters, lecithin, egg, and egg yolk. The term also includes mixtures of any the above. However, the term "emulsifier" as used herein does not include mammalian milk proteins. As pointed out above, fats and oils may include small amounts of substances such as mono or diglycerides or phospholipids. The term "emulsifier" does not include such molecules when they are naturally present in the fat in small quantities.

Overrun

The overrun of ice cream (and other frozen aerated confections) is defined by

$$\text{overrun \%} = \frac{\text{density of mix} - \text{density of ice cream}}{\text{density of ice cream}} \times 100$$

Overrun is measured (at atmospheric pressure) as follows. The density of the unaerated mix is determined by weighing a standard overrun cup containing mix at approximately 4°C, subtracting the mass of the cup and dividing by the known volume of the cup (density = mass/volume). A minimum of three repeat measurements is taken. The density of the (aerated) ice cream is determined by repeating the procedure using the same overrun cup with freshly drawn ice cream (at typically -5°C to -6°C). Again a minimum of three repeat measurements is taken. With knowledge of the density of both unaerated mix and aerated ice cream, the overrun can be calculated using the equation given above.

**Brief description of the invention**

We have now found that aerated frozen confections that have uniform aeration and good shaping properties can be prepared using a fat component that contains a substantial amount of polyunsaturated fat when the confection is substantially free from emulsifier. Accordingly, in a first aspect the present invention provides a frozen aerated confection comprising water; a fat component in an amount of 1 to 15% by weight of the frozen aerated confection wherein greater than 20% and less than 35% by weight of the fatty acids in the fat component are polyunsaturated, and less than 65% by weight of the fatty acids are saturated and the fat component comprises at least 80% by weight of a mixture of sunflower oil and coconut oil; mammalian milk protein; and sweetener; **characterised in that** the frozen confection contains less than 0.04% emulsifier by weight of the frozen confection.

Preferably the frozen aerated confection contains no emulsifier.

Preferably less than 55% by weight of the fatty acids are saturated fatty acids.

Preferably the fat component constitutes from 2 to 12% by weight of the frozen aerated confection.

Preferably the frozen aerated confection has an overrun of from 50 to 200%.

Preferably the mammalian milk protein constitutes from 1 to 8% by weight of the frozen aerated confection.

Preferably the mammalian milk is cow milk.

Preferably the frozen aerated confection contains less than 17% free sugars by weight of the frozen aerated confection.

In a second aspect, the present invention provides a process for manufacturing a frozen aerated confection comprising the steps of:

a) producing a mix comprising water; a fat component in an amount of from 1 to 15% by weight of the frozen aerated confection wherein greater than 20% and less than 35% by weight of the fatty acids in the fat component are polyunsaturated, and less than 65% by weight of the fatty acids are saturated - and the fat component comprises at least 80% by weight of a mixture of sunflower oil and coconut oil; less than 0.04% emulsifier by weight of the frozen confection; mammalian milk protein; and sweetener;

b) homogenising and pasteurising the mix;

c) freezing and aerating the mix in an ice cream freezer to form a frozen aerated confection; and

d) drawing the frozen aerated confection from the ice cream freezer.

Preferably the frozen aerated confection is drawn from the ice cream freezer at a temperature of below -4.0°C.

**Detailed description of the invention**

The fat component of the invention comprises greater than 20%, preferably greater than 22% and less than 35%, preferably less than 33% by weight polyunsaturated fatty acids. The fat component also comprises less than 65%, by weight saturated fatty acids, preferably less than 55%, very preferably less than 50%. In one embodiment, the fat component comprises less than 30%, preferably less than 20%, more preferably less than 10% SAFA. The lower the SAFA content, the greater the health benefit.

The fat component comprises a mixture of oils provided that greater than 20% and less than 35% by weight of the fatty acids are polyunsaturated.

It will be appreciated by those skilled in the art that the desired PUFA and SAFA amounts may be achieved when mixing two fats when one component of the mixture has a high saturated fat content and the other has a high unsaturated fat content. Examples of suitable mixtures include mixtures of coconut oil (CNO) with sunflower oil (SFO) and rapeseed oil (RPO). Coconut oil contains 92% SAFA, 6% MUFA and 2% PUFA. Sunflower oil contains 11% SAFA, 25% MUFA and 64% PUFA. Some specific examples of such mixtures are given in Table 2 by way of example only but it will be appreciated by those skilled in the art that mixtures having different proportions of the SFO, RPO, CNO could be formulated to have the desired PUFA and SAFA contents. It is also possible to add other fats for example olive oil (OV) and / or palm oil (PO). It will also be appreciated that other fats may be added in addition to those blends identified in Table 2, provided that the PUFA and SAFA levels are in accordance with the invention. Indeed, many other combinations are possible as will be apparent to those skilled in the art.

Table 2: Some suitable blends

| SFO | RPO | CNO | Other fat | SAFA | MUFA | PUFA |
|-----|-----|-----|-----------|------|------|------|
| 50 | 0 | 50 | 0 | 52 | 15 | 33 |
| 40 | 20 | 40 | 0 | 43 | 25 | 32 |

Particularly preferred are blends of sunflower oil and coconut oil owing to their clean flavour and wide availability.

Preferably the frozen aerated confection comprises less than 0.02%, more preferably less than 0.01% total emulsifier by weight of the frozen confection. Most preferably, the frozen aerated confection contains no emulsifier. In the presence of a fat component according to the invention, emulsifiers have been found to produce frozen aerated confections with poor aeration and shaping properties. Emulsifiers can also detract from the natural image of the product.

Preferably the frozen confection has an overrun of at least 50%, more preferably at least 80%. It is preferable that the overrun does not exceed 150%, however, otherwise the confection does not exhibit the cold mouth-feel conventionally associated with frozen confections. More preferably the overrun is less than 120%.

In order to aid in aeration during manufacture of the frozen confection it is preferable that the confection comprises mammalian milk protein in an amount of at least 1% by weight of the frozen confection, more preferably greater than 2%. In order to prevent the confection from exhibiting a chalky mouth-feel, however, it is also preferable that the protein content is less than 8%, more preferably less than 6% by weight of the frozen confection. Mammalian milk proteins provide good flavour, heat stability and surface activity.

Preferably the frozen aerated confection contains less than 1 wt%, preferably less than 0.5 wt%, more preferably less than 0.2 wt% of surface active proteins or protein derivatives (other than mammalian milk protein), for example soy protein and whipping agents derived from soy protein. It is believed that such proteins may have a similar effect to emulsifiers and therefore detrimentally affect the aeration and shaping properties. In a preferred embodiment, the frozen confection comprises substantially no protein other than mammalian milk proteins.

In order to provide the customary sweetness associated with frozen aerated confections and to avoid the confection being unduly hard, it is preferable that the frozen aerated confection comprises sweeteners in an amount of at least 5% by weight of the frozen confection, more preferably at least 10%, most preferably at least 15%. To avoid the frozen aerated confection being too sweet, the amount of sweeteners should be at most 35%, preferably at most 30%, most preferably at most 25% by weight of the confection.

A preferred sweetener is lactose, especially when added as part of the milk solids. This is because lactose has a relatively low molecular weight (and therefore provides excellent freezing point depression) but is neither overly sweet nor counted among the unhealthy free sugars (when added as part of the milk solids). Thus it is preferable that lactose is present in an amount of at least 3% by weight of the frozen confection, preferably at least 4%. In order to avoid crystallisation of the lactose, however, it is also preferred that the lactose is present in an amount of less than 9%, preferably less than 8% by weight of the frozen confection.

In order to increase the appeal of the frozen aerated confection to health conscious consumers, it is preferable that the amount of free sugars is less than 17% by weight of the frozen aerated confection, preferably less than 15%.

The frozen aerated confections may include stabilisers, such as alginates, gum arabic, gum ghatti, gum karaya, gum tragacanth, locust bean gum, carrageenans, xanthan gum, guar gum, gelatine, agar, sodium carboxymethylcellulose, microcrystalline cellulose, methyl and methylethyl celluloses, hydroxypropyl and hydroxypropylmethyl celluloses, low and high methoxyl pectins and mixtures thereof.

The frozen aerated confections may also include other ingredients typically found in such confections, for example colours and flavours.

Frozen aerated confections may be produced by any suitable process. In particular, they may be produced by a process comprising the steps of:

a) producing a mix comprising water; a fat component in an amount of from 1 to 15% by weight of the frozen aerated confection wherein greater than 20% and less than 35% by weight of the fatty acids in the fat component are polyunsaturated; less than 0.04% emulsifier by weight of the frozen confection; mammalian milk protein; and sweetener;

b) homogenising and pasteurising the mix;

c) freezing and aerating the mix in an ice cream freezer to form a frozen aerated confection; and

d) drawing the frozen aerated confection from the ice cream freezer.

Preferably the process further comprises hardening the frozen aerated confection after step (d). Typically the hardening temperature is from -17 to -40°C, preferably -20 to -35°C.

Preferably the frozen aerated confection is drawn from the ice cream freezer at a temperature of below -4.0°C, more preferably below -5.0°C, -6.0°C -7.0°C or -7.5°C, most preferably below - 8.0°C. The lower the temperature at which the frozen aerated confection is drawn from the freezer, the slower the meltdown of the hardened frozen aerated confection. By "meltdown" is meant the rate at which the frozen aerated confection melts in a constant temperature environment, measured in terms of mass loss over time, as follows. Stainless steel wire mesh grids having a size of 25 x 25 cm, with 3mm holes, 1 mm thick wire are placed on a 60° funnel with a bore size of 2cm suspended over a collecting vessel (of large enough volume to collect the entire sample tested). The collecting vessel is placed on a balance for weighing the material collected in the vessel. The balances are connected to a data logging system to record the mass collected. The apparatus consisting of grid, funnel, vessel and balance, is contained in a cabinet set at a constant temperature of 20 °C. The cabinet is capable of holding up to 12 of these sets of apparatus simultaneously. Samples in the form of rectangular blocks measuring 14.5 x 9 x 3.8cm are equilibrated in a freezer at -25 °C, and then weighed on a zeroed balance with the grid (one of the largest flat faces of the sample is in contact with the grid). The samples are then arranged randomly over the available positions in the meltdown cabinet. Once all samples are in place on the funnels, the data logging system records the amount of collected material every minute. From the mass of the sample collected over this period, the percentage mass loss of the samples is calculated using the following formula.

$$\%MassLoss = \frac{M_t - M_0}{F} \times 100$$

wherein:

$M_t$ = mass recorded on the balance (gram) at time t minute
$M_0$ = mass recorded on the balance (gram) at start of analysis, t = 0 minute
F = Initial mass of product (gram).

The present invention will be further described in the following examples which are illustrative only and non-limiting, and by reference to the figures wherein:

Figure 1 is a photograph of an ice cream of Example 1 after hardening.
Figure 2 is a photograph of an ice cream of Comparative Example A after hardening.

**Examples 1, A**

Ice cream mixes were prepared from ice cream formulations shown in Table 3. Example 1 is according to the invention. The fat source in example 1 is a 50/50 blend of coconut oil and sunflower oil. Comparative example A has the same formulation as example 1, but contains emulsifier.

Table 3: Formulations

| Ingredient (wt %) | Example 1 | Comp Ex A |
|---|---|---|
| Skimmed cow milk powder | 10 | 10 |
| HP60 emulsifier | - | 0.2 |
| Coconut oil | 4 | 4 |
| Sunflower oil | 4 | 4 |
| Rapeseed oil | - | - |
| Sucrose | 13 | 13 |
| MD40 | 4 | 4 |
| Vanillin | 0.012 | 0.012 |
| Canageenan L100 | 0.016 | 0.016 |
| Locust bean gum | 0.144 | 0.144 |
| Water | 64.828 | 64.628 |

HP60 emulsifier is a saturated mono-diglyoeride containing 60% monogtyceride, supplied by Danisco. MD40 is C*Dry GL 01934 dried glucose syrup containing 5% water, 36.5% mono and disaccharides and 58.5% other solids, supplied by Cerestar.
The mixes were prepared as follows. Water at 75-80°C was added into a tank equipped with a turbo mixer. The dry ingredients, except the milk powder, were mixed together and added to the tank followed by the cow milk powder and then the fat, which had been pre-melted if necessary. The mix was blended for 5-10 minutes at 60-70°C. The mix

6

was then homogenised at 140 bar and pasteurised at 82°C for 25 seconds in a plate heat exchanger and aged overnight at 4°C before processing.

Ice creams were prepared by freezing and aerating under shear. The mix was frozen and aerated to a target overrun of 100% using a scraped surface heat exchanger (Technohoy MF75). The ice cream was extruded at about -5.7°C through a nozzle with a triangular cross-section. On leaving the nozzle, ice cream portions were cut, collected on precooled trays, hardened at -35°C for 3 hours and then stored at -25°C.

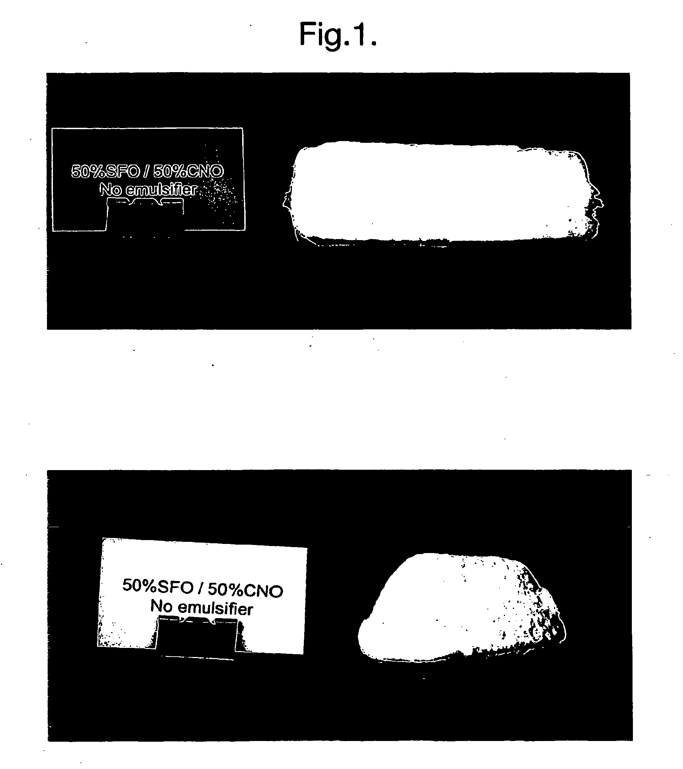

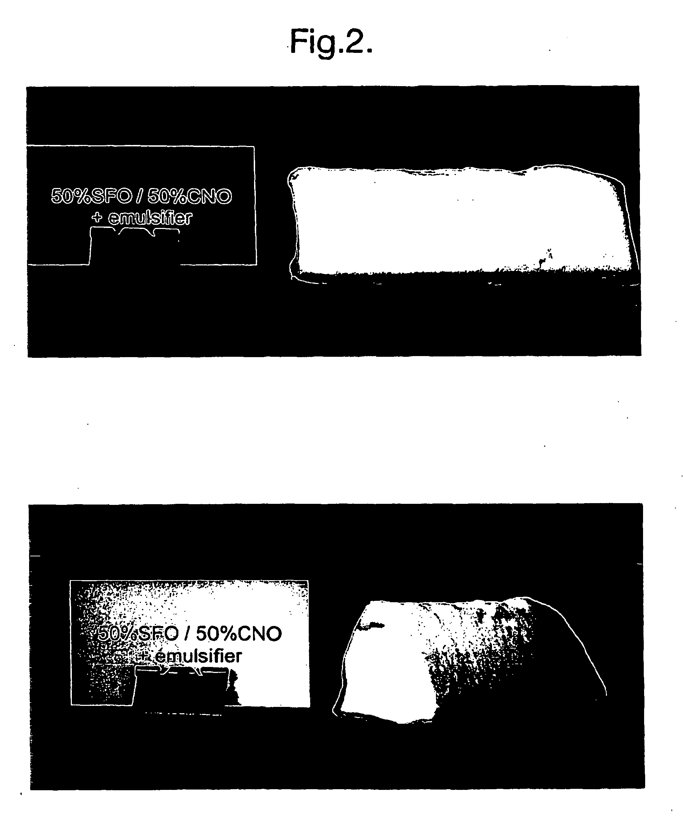

The samples were inspected for (a) shape, in particular the sharpness of the ridge on the top of the triangular samples and (b) uniformity of aeration - non-uniform aeration is indicated by visible air pockets on the surface of the ice cream. The overrun of the samples was also measured on leaving the freezer as described above. Photographs of the ice creams are shown in Figures 1 and 2 and the observations and results are summarized in Table 4.

Table 4: Results

|            | Ex 1            | Comp Ex A           |
|------------|-----------------|---------------------|
| Overrun (%) | 103            | 103                 |
| Shape      | Good            | Poor                |
| Aeration   | Few air pockets | Lots of air pockets |

These examples show that frozen aerated confections that have uniform aeration and good shaping properties can be prepared using unsaturated fats, provided that emulsifier is not used.

**Claims**

1. A frozen aerated confection comprising water; a fat component in an amount of 1 to 15% by weight of the frozen aerated confection wherein greater than 20% and less than 35% by weight of the fatty acids in the fat component are polyunsaturated, and less than 65% by weight of the fatty acids are saturated, mammalian milk protein; and sweetener; **characterised in that** the frozen confection contains less than 0.04% emulsifier by weight of the frozen confection and **in that** the fat component comprises at least 80% by weight of a mixture of sunflower oil and coconut oil.

2. A frozen aerated confection according to claim 1 which contains no emulsifier.

3. A frozen aerated confection according to claim 1 or claim 2 wherein less than 55% by weight of the fatty acids are saturated fatty acids.

4. A frozen aerated confection according to claim 1 or claim 2 wherein less than 50% by weight of the fatty acids are saturated fatty acids.

5. A frozen aerated confection according to claim 1 or claim 2 wherein less than 30% by weight of the fatty acids are saturated fatty acids.

6. A frozen aerated confection according to any preceding claim wherein the fat component constitutes from 2 to 12% by weight of the frozen aerated confection.

7. A frozen aerated confection according to any preceding claim having an overrun of from 50 to 200%.

8. A frozen aerated confection according to any preceding claim wherein the mammalian milk protein constitutes from 1 to 8% by weight of the frozen aerated confection.

9. A frozen aerated confection according to any preceding claim wherein the frozen confection comprises substantially no protein other than mammalian milk proteins.

10. A frozen aerated confection according to any preceding claim wherein the free sugars constitute less than 17% by weight of the frozen aerated confection.

11. A process for manufacturing a frozen aerated confection comprising the steps of:

a) producing a mix comprising water; a fat component in an amount of from 1 to 15% by weight of the frozen aerated confection wherein greater than 20% and less than 35% by weight of the fatty acids in the fat component are polyunsaturated, and less than 65% by weight of the fatty acids are saturated and the fat component comprises at least 80% by weight of a mixture of sunflower oil and coconut oil; less than 0.04% emulsifier by weight of the frozen confection; mammalian milk protein; and sweetener;

b) homogenising and pasteurising the mix;

c) freezing and aerating the mix in an ice cream freezer to form a frozen aerated confection; and

d) drawing the frozen aerated confection from the ice cream freezer.

12. A process according to claim 13 wherein the frozen aerated confection is drawn from the ice cream freezer at a temperature of below -4.0°C.

**Patentansprüche**

1. Tiefgekühlte, belüftete Süßware, umfassend Wasser, eine Fettkomponente in einer Menge von 1 bis 15 Gewicht-% der tiefgekühlten, belüfteten Süßware, wobei mehr als 20 Gewichts-% und weniger als 35 Gewichts-% der Fettsäuren in der Fettkomponente mehrfach ungesättigte sind und weniger als 65 Gewichts-% der Fettsäuren gesättigte sind, Säugermilchprotein und Süßungsmittel, **dadurch gekennzeichnet, dass** die tiefgekühlte Süßware weniger als 0,04 Gewichts-% Emulgator, bezogen auf die tiefgekühlte Süßware, enthält und dass die Fettkomponente wenigstens 80 Gewichts-% eines Gemisches aus Sonnenblumenöl und Kokosnussöl umfasst.

2. Tiefgekühlte, belüftete Süßware nach Anspruch 1, die keinen Emulgator enthält.

3. Tiefgekühlte, belüftete Süßware nach Anspruch 1 oder Anspruch 2, wobei weniger als 55 Gewichts-% der Fettsäuren gesättigte Fettsäuren sind.

4. Tiefgekühlte, belüftete Süßware nach Anspruch 1 oder Anspruch 2, wobei weniger als 50 Gewichts-% der Fettsäuren gesättigte Fettsäuren sind.

5. Tiefgekühlte, belüftete Süßware nach Anspruch 1 oder Anspruch 2, wobei weniger als 30 Gewichts-% der Fettsäuren gesättigte Fettsäuren sind.

6. Tiefgekühlte, belüftete Süßware nach einem der vorangehenden Ansprüche, wobei die Fettkomponente 2 bis 12 Gewichts-% der tiefgekühlten, belüfteten Süßware ausmacht.

7. Tiefgekühlte, belüftete Süßware nach einem vorangehenden Anspruch, die einen Überlauf von 50 bis 200 % hat.

8. Tiefgekühlte, belüftete Süßware nach einem vorangehenden Anspruch, wobei das Säugermilchprotein 1 bis 8 Gewichts-% der tiefgekühlten, belüfteten Süßware ausmacht.

9. Tiefgekühlte, belüftete Süßware nach einem vorangehenden Anspruch, wobei die tiefgekühlte Süßware im Wesentlichen kein anderes Protein als Säugermilchproteine umfasst.

10. Tiefgekühlte, belüftete Süßware nach einem vorangehenden Anspruch, wobei die freien Zucker weniger als 17 Gewichts-% der tiefgekühlten, belüfteten Süßware ausmachen.

11. Verfahren zur Herstellung einer tiefgekühlten, belüfteten Süßware, umfassend die Schritte:

a) Herstellen einer Mischung, die Wasser, eine Fettkomponente in einer Menge von 1 bis 15 Gewichts-% der tiefgekühlten, belüfteten Süßware, wobei mehr als 20 Gewichts-% und weniger als 35 Gewichts-% der Fettsäuren in der Fettkomponente mehrfach ungesättigte sind und weniger als 65 Gewichts-% der Fettsäuren gesättigte sind und wobei die Fettkomponente wenigstens 80 Gewichts-% eines Gemisches aus Sonnenblumenöl und Kokosnussöl, weniger als 0,04 Gewichts-%, bezogen auf das Gewicht der tiefgekühlten Süßware, Emulgator, Säugermilchprotein und Süßungsmittel umfasst;

b) Homogenisieren und Pasteurisieren der Mischung;

c) Tiefkühlen und Belüften der Mischung in einem Eiscreme-Gefriergerät unter Bildung einer tiefgekühlten, belüfteten Süßware und

d) Abziehen der gekühlten, belüfteten Süßware aus dem Eiscreme-Gefriergerät.

**12.** Verfahren nach Anspruch 11, wobei die tiefgekühlte, belüftete Süßware aus dem Eiscreme-Gefriergerät bei einer Temperatur von unter -4,0 °C abgezogen wird.

## Revendications

**1.** Dessert aéré surgelé comprenant de l'eau ; un composant gras représentant de 1 à 15 % en poids du dessert aéré surgelé, selon lequel plus de 20 % et moins de 35 % en poids des acides gras dans le composant gras sont polyinsaturés, et moins de 65 % en poids des acides gras sont saturés, une protéine de lait de mammifère ; et un édulcorant ; **caractérisé en ce que** le dessert surgelé comprend moins de 0,04 % d'émulsifiant en poids du dessert surgelé et **en ce que** le composant gras comprend au moins 80 % en poids d'un mélange d'huile de tournesol et d'huile de noix de coco.

**2.** Dessert aéré surgelé selon la revendication 1 ne contenant pas d'émulsifiant.

**3.** Dessert aéré surgelé selon la revendication 1 ou la revendication 2, selon lequel moins de 55 % en poids des acides gras sont des acides gras saturés.

**4.** Dessert aéré surgelé selon la revendication 1 ou la revendication 2, selon lequel moins de 50 % en poids des acides gras sont des acides gras saturés.

**5.** Dessert aéré surgelé selon la revendication 1 ou la revendication 2, selon lequel moins de 30 % en poids des acides gras sont des acides gras saturés.

**6.** Dessert aéré surgelé selon l'une quelconque des revendications précédentes, selon lequel le composant gras constitue de 2 à 12 % en poids du dessert aéré surgelé.

**7.** Dessert aéré surgelé selon l'une quelconque des revendications précédentes présentant un taux de foisonnement de 50 à 200 %.

**8.** Dessert aéré surgelé selon l'une quelconque des revendications précédentes, selon lequel la protéine de lait de mammifère représente de 1 à 8 % en poids du dessert aéré surgelé.

**9.** Dessert aéré surgelé selon l'une quelconque des revendications précédentes, selon lequel le dessert surgelé ne comprend sensiblement aucune autre protéine que les protéines de lait de mammifère.

**10.** Dessert aéré surgelé selon l'une quelconque des revendications précédentes, selon lequel les sucres représentent moins de 17 % en poids du dessert aéré surgelé.

**11.** Procédé de fabrication d'un dessert aéré surgelé comprenant les étapes de :

a) production d'un mélange comprenant de l'eau ; un composant gras représentant de 1 à 15 % en poids du dessert aéré surgelé, selon lequel plus de 20 % et moins de 35 % en poids des acides gras dans le composant gras sont polyinsaturés, et moins de 65 % en poids des acides gras sont saturés et le composant gras comprend au moins 80 % en poids d'un mélange d'huile de tournesol et d'huile de noix de coco ; moins de 0,04 % d'émulsifiant en poids du dessert surgelé ; une protéine de lait de mammifère ; et un édulcorant ;
b) homogénéisation et pasteurisation du mélange ;
c) congélation et aération du mélange dans une sorbetière afin de former un dessert aéré surgelé ; et
d) retrait du dessert aéré surgelé de la sorbetière.

**12.** Procédé selon la revendication 11, selon lequel le dessert aéré surgelé est retiré de la sorbetière à une température inférieure à - 4,0°C.

EP 1 913 819 B1

# Fig.1.

10

# Fig.2.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5478587 A

- JP 2006136306 A

**Non-patent literature cited in the description**

- Ice Cream. Kluwer Academic / Plenum Publishers, 2003, 36, 42-4369
- **C. Clarke.** The Science of Ice Cream. Royal Society of Chemistry, 2004, 46-4862-73
- Ice Cream

- **Frank D Gunstone ; John L Harwood ; Fred B Padley.** The Lipid Handbook. Chapman & Hall, 1994
- Ice Cream. 85-86